(19) Europäisches Patentamt / European Patent Office / Office européen des brevets

(11) **EP 3 356 204 B1**

(12) **FASCICULE DE BREVET EUROPEEN**

(45) Date de publication et mention
de la délivrance du brevet:
**08.05.2024   Bulletin 2024/19**

(21) Numéro de dépôt: **16785234.2**

(22) Date de dépôt: **28.09.2016**

(51) Classification Internationale des Brevets (IPC):
**B62D 15/02** *(2006.01)*        **B60W 30/12** *(2020.01)*
**B60W 30/09** *(2012.01)*

(52) Classification Coopérative des Brevets (CPC):
**B62D 15/0265; B60W 30/09; B60W 30/12;**
B60W 2420/905; B60W 2554/00; B60W 2710/207

(86) Numéro de dépôt international:
**PCT/FR2016/052458**

(87) Numéro de publication internationale:
**WO 2017/055738 (06.04.2017 Gazette 2017/14)**

(54) **SYSTÈME DE COMMANDE DE LA DIRECTION D'UN VÉHICULE AUTOMOBILE EN CAS DE COLLISION IMMINENTE AVEC UN OBSTACLE**

SYSTEM ZUR STEUERUNG DER LENKMITTEL EINES KRAFTFAHRZEUGS IM FALLE EINER DROHENDEN KOLLISION MIT EINEM HINDERNIS

SYSTEM FOR CONTROLLING THE STEERING MEANS OF A MOTOR VEHICLE IN CASE OF AN IMMINENT COLLISION WITH AN OBSTACLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **30.09.2015   FR 1559256**

(43) Date de publication de la demande:
**08.08.2018   Bulletin 2018/32**

(73) Titulaire: **Ampere SAS**
**92100 Boulogne-Billancourt (FR)**

(72) Inventeurs:
• **MINOIU ENACHE, Nicoleta**
**78000 Versailles (FR)**
• **CHIRCA, Mihai**
**75015 Paris (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**DE-A1-102012 202 916      US-A1- 2010 235 035**

• **Nicoleta Minoiu-Enache: "Assistance préventive à la sortie de voie", Thèse de doctorat, Université d'Evry-Val-d'Essonne, 17 novembre 2008 (2008-11-17), XP055286945, Extrait de l'Internet: URL:http://www.biblio.univ-evry.fr/theses/2008/2008EVRY0046.pdf [extrait le 2016-07-08]**

**Description**

L'invention a pour domaine technique l'aide à la conduite de véhicules automobiles, et plus particulièrement l'aide à l'évitement d'obstacles.

Les accidents par sortie involontaire de voie, dues à l'inattention du conducteur continuent de représenter une partie importante des accidents de la circulation routière. Dotés de moyens de sécurité active, certains véhicules sont capables d'évaluer leur trajectoire et de reconnaître l'environnement afin de disposer d'une mesure de risque associée à la situation. Des actions peuvent alors être entreprises automatiquement ou en partage avec le conducteur afin de maintenir le véhicule dans sa voie de circulation pour des cas de manque de vigilance du conducteur, d'endormissement ou de malaise. Il s'agit de la fonction de sécurité active « Lane Keeping Assistance» (LKA) ou « Lane Departure Avoidance » (LDA).

Jusqu'à présent, la décision d'activation d'un tel système d'aide à la conduite tenait compte uniquement d'un possible dépassement de la voie de circulation.

De l'état de la technique antérieure, on connaît les documents suivants traitant du problème d'évitement de collision latérale ou frontale quand le véhicule quitte sa voie de circulation.

Les documents EP1790542 (Nissan Motors), KR100851120 (Hyundai Motor) et US7580785B2 (Nissan Motor) décrivent des applications de type « Lane Departure Avoidance » ou « Lane Keeping Assist »

Dans ce type d'application les marquages de la voie sont détectés et une intervention par le braquage des roues ou par le freinage différentiel est entreprise pour éviter la sortie de la voie. Toutefois, dans ces documents, les obstacles latéraux ne sont pas pris en compte.

Les documents EP 2 288 533 B1, EP 1 726 481 B1, US 8,111,147 B2, et GB (11)25123 17 (13)A2 décrivent des applications de type « Blind Spot Intervention » ou « Lane Change Assist ». Dans ce type d'application, on détermine le souhait du conducteur de changer de voie à travers l'activation des clignotants, et on estime si la manoeuvre est dangereuse en déterminant si un véhicule est présent dans un angle mort, ou s'approche avec une vitesse relative importante. Dans un tel cas, une correction de trajectoire est effectuée à travers le braquage ou le freinage différentiel. Dans ces documents, les obstacles latéraux fixes ne sont pas pris en compte. Par ailleurs, l'objectif est uniquement d'aider le conducteur dans le cas d'un changement volontaire de voie et non d'intervenir lors d'un départ involontaire de la voie de circulation.

Le document US2010235035 décrit un dispositif et un procédé de détermination de manoeuvres d'évitement pour l'évitement d'un obstacle sur le trajet d'un véhicule automobile et le document DE102012202916 décrit un procédé et un dispositif de commande d'un véhicule apte à commander la trajectoire du véhicule par action sur la direction du véhicule, de type « Lane Keep Support».

Dans les applications précédentes, la notion d'un système d'évitement de sortie involontaire de voie tenant compte des vrais dangers de collision latérale, n'existe pas.

Il existe donc un besoin pour un système de commande de la direction du véhicule en cas de collision imminente tenant compte de manière effective des obstacles latéraux et fonctionnant de manière transparente pour le conducteur.

En effet, des activations trop fréquentes peuvent ennuyer le conducteur et le pousser à désactiver la fonction, ce qui réduit son efficacité pour prévenir les accidents.

De plus, dans certaines situations la voie navigable en pleine sécurité se rétrécit d'autant plus s'il y a des obstacles au bord de la route. Par exemple, le risque pour le véhicule lors d'un franchissement de ligne blanche est différent si au-delà de celle-ci, la chaussée comprend 80 cm de goudron ou si la chaussé ne comprend que 20 cm de goudron suivis d'un fossé ou d'une barrière de sécurité.

L'invention a pour objet un système de commande de la direction d'un véhicule automobile en cas de collision imminente avec un obstacle selon la revendication 1.

Le véhicule comprend un système apte à repérer le véhicule par rapport à sa voie de circulation et apte à déterminer un écart latéral par rapport au centre de la voie à une distance de visée et un angle de cap relatif du véhicule, un moyen de détermination associé à des capteurs, apte à déterminer en temps réel la présence d'obstacles, en position latérale par rapport au véhicule, et/ou en position frontale et en déplacement relatif vers le véhicule, un gyromètre apte à mesurer la vitesse de rotation du véhicule et une direction du véhicule, apte à être pilotée en angle de braquage en fonction de la mesure d'un capteur d'angle de braquage ou une direction du véhicule apte à être pilotée en couple de braquage .

Le système de commande comprend un moyen de perception apte à évaluer la position des obstacles et à déterminer la distance latérale maximale disponible pour le déplacement du véhicule par rapport à ces obstacles, un moyen de prise de décision apte à émettre une requête de correction en fonction de la trajectoire du véhicule, et de la distance maximale latérale et un moyen d'intervention apte à commander la direction du véhicule pour corriger la trajectoire du véhicule. Le moyen de prise de décision est apte à déterminer des gains de correction de position, à mémoriser au moins un ensemble parmi les gains de correction de position, et, lorsque parmi le premier au moins un ensemble de gains, il ne reste qu'un seul gain, à émettre la requête d'activation de la correction correspondant à l'ensemble comprenant le gain restant, le gain restant étant transmis au moyen d'intervention afin que la correction soit exécutée.

Le moyen de perception peut être apte à déterminer la position des obstacles par reconnaissance de forme, puis à déterminer une distance de déplacement latéral du véhicule en fonction de la vitesse de lacet, de l'angle relatif de cap entre l'axe du véhicule et la tangente à la trajectoire de référence, de l'écart latéral entre l'axe du véhicule et la tangente à la trajectoire en avant du véhicule, de l'angle de dérive, de la distance du centre de gravité à l'essieu avant, et de la distance de visée pour la mesure de l'écart latéral en avant du véhicule.

Le moyen de prise de décision peut être apte à émettre une requête d'activation de correction en fonction de la position du véhicule sur la voie de circulation par rapport au déplacement latéral maximal du véhicule sur la voie déterminée par le moyen de perception.

Le moyen de prise de décision peut être apte à déterminer en continu des gains de correction de position, à mémoriser un premier ensemble parmi les gains de correction de position correspondant à une valeur de déplacement latéral inférieure à une valeur de déplacement latéral maximal sur le côté gauche de la voie, à mémoriser un deuxième ensemble parmi les gains de correction de position correspondant à une valeur de déplacement latéral inférieure à une valeur de déplacement latéral maximal sur le côté droit de la voie, et à émettre la requête d'activation de la correction pour une déviation à gauche, respectivement à droite, lorsque parmi le premier ou le deuxième ensemble de gains, il ne reste qu'un seul gain, le gain restant étant transmis au moyen d'intervention afin que la correction soit exécutée.

Le moyen de prise de décision peut être apte à déterminer des gains de correction de position, à mémoriser un troisième ensemble parmi les gains de correction de position correspondant à une valeur de déplacement latéral inférieure à une distance maximale par rapport au centre de voie, et à émettre la requête d'activation de la correction lorsque parmi les gains du troisième ensemble il ne reste qu'un seul gain, le gain restant étant transmis au moyen d'intervention afin que la correction soit exécutée.

Le moyen d'intervention peut être apte à commander la correction de la trajectoire du véhicule en fonction du gain reçu du moyen de prise de décision, la correction étant émise à destination d'un moyen de calcul du braquage en relation avec la direction du véhicule sous la forme d'une consigne d'angle de braquage, ou la correction est émise à destination d'un moyen de commande de l'assistance au braquage sous la forme d'une consigne de couple de braquage.

La direction du véhicule peut être changée par l'intermédiaire d'une colonne de direction dirigeant les roues avant du véhicule, ou par l'intermédiaire d'un système de braquage des roues arrières du véhicule, ou par le freinage différentiel d'au moins une des quatre roues du véhicule ou par un autre moyen capable à changer la direction du véhicule. Dans les descriptions suivantes, une colonne de direction des roues avant directrices sera prise comme exemple, les autres modes de réalisation de l'actionnement restent toute à fait possibles.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'un système de commande de la direction d'un véhicule automobile en cas de collision imminente avec un obstacle et
- la figure 2 illustre une situation de circulation du véhicule automobile muni d'un système selon l'invention.

On définit les notations suivantes :

m (kg)  : Masse totale du véhicule

Iz (N.m)  : Inertie du véhicule autour d'un axe vertical passant par son centre de gravité CG

lf (m)  : Distance de CG à l'essieu avant

lr (m)  : Distance de CG à l'essieu arrière

a(m)  : Empattement du véhicule

cf (N/rad)  : Rigidité de dérive des roues avant

cr (N/rad)  : Rigidité de dérive des roues arrière

$\delta$f (rad)  : Angle que font les roues avant avec l'axe longitudinal du véhicule

r (rad/s)  : Vitesse de lacet (vitesse de rotation du véhicule autour de son centre de gravité suivant un axe vertical)

$\Psi$ (rad/s)          : Angle de cap véhicule en repère absolu

$\Psi$d (rad/s)        : Angle de cap de la tangente à la trajectoire de référence en repère absolu

$\Psi$L (rad/s)        : Angle relatif de cap entre l'axe du véhicule et la tangente à la trajectoire de référence

yLCG (m)       : Ecart latéral entre l'axe du véhicule et la tangente à la trajectoire au CG du véhicule

yL (m)            : Ecart latéral entre l'axe du véhicule et la tangente à la trajectoire en avant du véhicule

ls (m)             : La distance de visée pour la mesure de l'écart latéral en avant du véhicule

$\beta$ (rad)         : Angle de dérive (angle que fait le vecteur vitesse du véhicule avec son axe longitudinal)

(vCG)v          : Vecteur vitesse du véhicule au centre de gravité

v (m/s)           : Vitesse du véhicule selon l'axe longitudinal

$\rho$ref (1/m)      : Courbure de la route

L                     : La largeur de la voie de circulation

$\alpha$ (rad)        : Angle de dérive calculé par un observateur

g                     : Accélération gravitationnelle considérée égale à 9.81m/s2

$\xi$v                  : Paramètre décrivant la variation de la vitesse à l'intérieur de l'intervalle [vmin ;vmax]

K                     : Vecteur réel de dimension 1x4

P                     : Matrice réelle de dimension 4x4, définie positive et symétrique.

Q                     : Matrice réelle de dimension 4x4, définie positive et symétrique.

$Q=P^{-1}$        : P Matrice réelle de dimension 4x4, définie positive et symétrique.

Le véhicule automobile est muni des équipements suivants :

- Un système pour repérer le véhicule par rapport à sa voie de circulation (par exemple une caméra), apte à déterminer un écart latéral par rapport au centre de la voie à une distance de visée yL et un angle de cap relatif du véhicule $\Psi$L ;
- Des capteurs, de type caméra ou radar, et un moyen de détermination associé apte à déterminer en temps réel la présence d'obstacles. Les paramètres relatifs aux obstacles déterminés sont la position de l'obstacle dans un repère avec l'origine fixée au centre du capteur respectif.
- Un gyromètre apte à mesurer la vitesse de rotation du véhicule.
- Une direction du véhicule apte à être pilotée en angle de braquage en fonction de la mesure d'un capteur d'angle de braquage ou une direction du véhicule apte à être pilotée en couple de braquage.

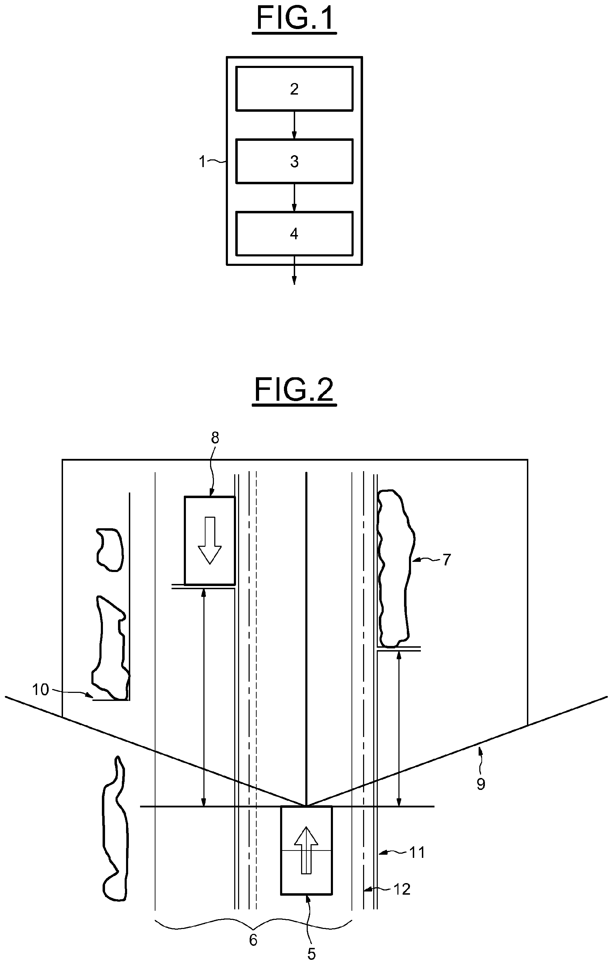

Le système de commande 1 de la direction du véhicule en cas de collision imminente comprend un moyen de perception 2, un moyen de prise de décision 3 et un moyen d'intervention 4, tel qu'illustré par la figure 1.
Le moyen de perception 2 est apte à évaluer la position des obstacles latéraux ou la distance latérale par rapport à un obstacle frontal se dirigeant vers le véhicule.
Le moyen de prise de décision 3 est apte à analyser si une action corrective est nécessaire ou non.
Le moyen d'intervention 4 est apte à commander l'actionneur pour corriger la trajectoire du véhicule.
Ces trois moyens peuvent être localisés dans trois unités de calcul différentes ou dans la même unité de calcul.
On va maintenant décrire les principes de la perception d'obstacles latéraux.
Afin d'assurer la sécurité du véhicule et de ses occupants, il est nécessaire de détecter la position et l'enveloppe des obstacles ainsi que la distance latérale et longitudinale entre le véhicule et ces obstacles. De plus il faut discriminer ces obstacles en fonction de leurs vitesses (statiques, dynamiques).

Il est intéressant de noter que certains cas de collision ne sont pas pris en compte aujourd'hui par le LKA (acronyme anglophone pour « Lane Keep Assist ») conventionnel. Ces cas apparaissent lorsque la ligne critique de débattement latéral est à l'intérieur de la voie.

Dans un cas, il n'est pas suffisant de réaliser un suivi de voie en utilisant les marquages au sol, mais il faut également déterminer où sont les obstacles et prendre les décisions d'évitement qui s'imposent.

De plus, il est également nécessaire de prendre en compte les obstacles qui ne sont pas situés dans une position de collision, par exemple un obstacle situé à l'extérieur de la voie, afin de définir une distance de sécurité minimale de sorte que le véhicule se déporte à l'approche de cet obstacle. La figure 2 illustre une telle situation du véhicule 5 au cours de laquelle des obstacles 7 se situent à l'extérieur de la voie de circulation 6, un autre véhicule 8 approchant à contre-sens. Il est alors nécessaire de détecter l'enveloppe 10 de ces obstacles et la distance latérale et longitudinale entre le véhicule 5 muni du système de commande, le véhicule 8 approchant à contre-sens et les obstacles 7. De plus, il faut calculer la vitesse de ces objets et les discriminer en fonction de leur vitesse (objets statiques, objets dynamiques). On peut observer la limite de collision 11 et la limite critique 12. En cas de franchissement de ces lignes, l'accident ne peut pas être évité.

Pour le calcul de la vitesse des objets il suffit de calculer en continu la distance entre notre moyen de perception et les objets. En connaissant également le déplacement de notre véhicule, donc du moyen de perception qui est fixé sur le véhicule, on peut ainsi déterminer la variation de déplacement des objets dans un intervalle de temps.

En fonction du capteur utilisé, le calcul de la distance est différent. Par exemple, on peut utiliser des radars qui permettent de mesurer directement des distances sans passer par une estimation. Toutefois, si les radars présentent d'excellentes performances dans le calcul de la distance, ils présentent des performances bien moins bonnes pour la détermination des angles et donc des distances latérales.

Il est également possible d'employer des LIDARs (acronyme anglophone pour « Light Detection and Ranging ») d'une manière similaire aux radars. Toutefois, leur prix est élevé ce qui est un facteur limitant pour l'industrie automobile.

Alternativement, la même caméra que celle employée pour la détection de changement de voie peut être employée. C'est ce dernier cas qui va être décrit maintenant.

Pour cela, on pose les principes de calcul de la distance entre le véhicule et un point sur la route à partir d'une image acquise par une caméra embarquée.

La correspondance entre un point dans un espace à deux dimensions (image) et un point dans un espace à trois dimensions (monde réel) est donnée par l'équation suivante.

$$p = \begin{bmatrix} sx \\ sy \\ s \end{bmatrix} = \begin{bmatrix} * & * & * & * \\ * & * & * & * \\ * & * & * & * \end{bmatrix} \begin{bmatrix} X \\ Y \\ Z \\ 1 \end{bmatrix} = \Pi P_{3D} \qquad (\text{Eq. 1})$$

Avec :

X, Y, Z : les coordonnées du point dans l'espace à trois dimensions, dans un repère fixé (nommé repère absolu) de telle manière que Z=0 correspond au niveau de la route

x, y : les coordonnées du point dans l'espace à trois dimensions, centré sur la caméra, calculées à un facteur d'échelle près

s : un facteur d'échelle,

$P_{3D}$ : vecteur de coordonnées homogènes du point dans l'espace à trois dimensions en repère absolu

$\Pi$ : matrice de transfert ou de projection exprimée sous forme homogène,

p : vecteur de coordonnées du point dans l'espace à trois dimensions, centré sur la caméra, calculées à un facteur d'échelle près

On décompose la matrice de transfert $\Pi$ de manière suivante :

$$\Pi = M_I \times M_{\text{Proj}} \times M_O \times M_{Pos} \qquad (\text{Eq. 2})$$

Avec :

$$M_I = \begin{bmatrix} s_x & 0 & -t_x \\ 0 & s_y & -t_y \\ 0 & 0 & 1/f \end{bmatrix}$$

$$M_{\mathrm{Proj}} = \begin{bmatrix} 1 & 0 & 0 & 0 \\ 0 & 1 & 0 & 0 \\ 0 & 0 & 1 & 0 \end{bmatrix}$$

$$M_O = \begin{bmatrix} R_{3\times3} & 0_{3\times1} \\ 0_{1\times3} & 1 \end{bmatrix}$$

$$M_{Pos} = \begin{bmatrix} I_{3\times3} & T_{3\times1} \\ 0_{1\times3} & 1 \end{bmatrix}$$

$R_{3\times3}$ : Matrice de rotation trois lignes par trois colonnes ;
$T_{3\times1}$ : Matrice de translation trois lignes par une colonne ;
$0_{1\times3}$ : Vecteur nul trois lignes par une colonne ;
$0_{3\times1}$ : Vecteur nul une ligne par trois colonnes ;

Cette matrice comprend les informations suivantes, connues après une phase de calibrage.

On connaît l'emplacement exact de chaque caméra dans le véhicule. On connaît donc la matrice de rotation R et la matrice de translation T pour chacune des caméras.

La matrice de paramètres intrinsèques $M_I$ est déterminée par calibration de chaque caméra avec une mire. Ici on cite la méthode et l'outil de référence dans le domaine, « Camera Calibration Toolbox for Matlab » publié par Caltech University. Cet outil prend en entrée la dimension des rectangles en composition de la mire, le numéro de lignes et de colonnes de la mire et plusieurs prises de vue de la mire depuis différents positions. L'algorithme donne en sortie la matrice de paramètres intrinsèques.

Si on considère que la voiture est sur une route plane et que l'on détecte des points disposés sur celle-ci, le problème se simplifie mais reste tributaire de la résolution de l'image.

On pose alors les coordonnées (X, Y, Z) définissant un point de l'espace à trois dimensions répondant au postulat décrit ci-dessus. Les équations se réécrivent de manière suivante si la coordonnée Z est nulle. En effet, le point est alors situé sur la route.

$$p = \begin{bmatrix} sx \\ sy \\ s \end{bmatrix} = \begin{bmatrix} * & * & * & * \\ * & * & * & * \\ * & * & * & * \end{bmatrix} \begin{bmatrix} X \\ Y \\ Z \\ 1 \end{bmatrix} = \Pi P_{3D} \qquad (\mathrm{Eq.\ 3})$$

Un point dans le repère à trois dimensions est bien déterminé dans l'espace à deux dimensions en utilisant une seule prise de vue si et seulement si ce point est disposé sur la route (ce qui implique que Z=0). Le facteur d'échelle (s) disparaît alors.

$$p = \begin{bmatrix} sx \\ sy \\ s \end{bmatrix} = \begin{bmatrix} x_1 \\ x_2 \\ x_3 \end{bmatrix} = \begin{bmatrix} p_{11} & p_{12} & p_{13} & p_{14} \\ p_{21} & p_{22} & p_{23} & p_{24} \\ p_{31} & p_{32} & p_{33} & p_{34} \end{bmatrix} \begin{bmatrix} X \\ Y \\ 0 \\ 1 \end{bmatrix} \qquad (Eq. \ 4)$$

On peut alors simplifier la matrice de transfert Π et la matrice de coordonnées du point dans l'espace à trois dimensions $P_{3D}$ puisque la coordonnée correspondant à la direction Z est nulle, ce qui correspond au niveau de la route. L'équation 4 peut alors être réécrite de la façon suivante.

$$\mathbf{p} = \begin{bmatrix} x_1 \\ x_2 \\ x_3 \end{bmatrix} = \begin{bmatrix} p_{11} & p_{12} & p_{14} \\ p_{21} & p_{22} & p_{24} \\ p_{31} & p_{32} & p_{34} \end{bmatrix} \begin{pmatrix} X \\ Y \\ 1 \end{pmatrix} \qquad (Eq. \ 5)$$

Un suivi continu des points d'intérêts permet d'améliorer la précision de calcul. L'état de la technique antérieure comprend de nombreux exemples de classification d'objets permettant un tel suivi. Afin de favoriser la concision et la clarté de la présente description, de tels exemples ne seront pas décrit.

La description suivante n'est donnée que dans le cadre de la prise en compte de points respectent la contrainte Z=0.

A l'instant t, on cherche dans l'image tous les points d'intérêt, en d'autres termes tous les obstacles éventuels. Pour cela, on peut utiliser un opérateur de type Harris comprenant les étapes suivantes, pour chaque point d'intérêt : On détermine une image rognée comprenant le point d'intérêt dans le centre. Le choix de la dimension de cette image rognée se fait dans l'étape de calibrage de l'algorithme, et dépend de la qualité de l'image et de l'algorithme de recherche des points/images rognées. On utilise généralement des dimensions comprises entre 20x20 pixels et 50x50 pixels. Plus l'image rognée est grande, plus la comparaison sera précise mais la comparaison des images rognées demandera plus de temps de calcul.

On détermine à l'instant t, la position du point d'intérêt en fonction de l'image rognée qui lui correspond.

Connaissant le déplacement relatif du véhicule grâce à l'odométrie et la position estimée à l'instant t, on estime la position du point d'intérêt à l'instant t+dt s'il appartient au plan Z=0.

On détermine à l'instant t+dt, l'image rognée comprenant le point d'intérêt.

On détermine à l'instant t+dt, la position du point d'intérêt en fonction de l'image rognée qui lui correspond.

On détermine si la position estimée du point d'intérêt à t+dt correspond à la position du point d'intérêt déterminée en fonction de l'image rognée acquise à l'instant t+dt.

Si tel est le cas, on détermine que le point d'intérêt est situé sur le sol, sinon le point d'intérêt est considéré comme situé plus haut ou plus bas que la route.

On applique ce processus de manière récurrente et pour éviter les fausses détections d'objets, on sauvegarde les réponses antérieures et uniquement après une confirmation répétée du résultat, on confirme l'existence d'un obstacle.

Ce procédé simple et déjà connu est bien utilisé dans la communauté de traitement de l'image pour des problématiques de reconstruction 3D de l'environnement. Cette fonction de calcul de la distance à un objet peut très bien être remplacée par une autre plus performante sans remettre en cause le fonctionnement global du système.

Le résultat de la détection des obstacles est une position 3D dans le repère absolu qui permet de déterminer ensuite une distance longitudinale et latérale de collision entre le véhicule et l'obstacle. Ensuite, après l'ajout d'une marge qui peut être calibrée en fonction de la position de l'obstacle par rapport au centre de la voie, on calcule la distance critique Dmax par l'intermédiaire des équations décrites plus loin.

Un objectif est celui de ne pas dépasser la distance critique Dmax pendant la phase de correction de trajectoire en cas de sortie involontaire de la voie de circulation.

L'évaluation du déplacement latéral maximal du véhicule sur la voie est réalisée par un système de commande de la direction du véhicule en cas de collision imminente comme illustré par la figure 1, apte à réaliser une correction de trajectoire de type retour d'état statique à partir du modèle de véhicule.

La thèse de doctorat de N. Minoiu Enache «Assistance préventive à la sortie de voie », soutenue le 17.11.2008 à l'Université d'Evry Val d'Essonne comprend un exemple d'une formule de calcul du déplacement latéral maximal du véhicule.

Dans le but de modéliser le véhicule, on fait les hypothèses suivantes.

Les angles β, δf, sont petits de sorte que l'approximation des petits angles peut être appliquée aux fonctions trigonométriques (sin(angle)≈angle et cos(angle) ≈1).

On pose $(v_{CG})v=(v, v*(\sin \beta), 0)^T$ et après l'approximation des petits angles, on obtient $(vco)v \approx (v, v*\beta, 0)^T$

$(v_{CG})v$ : représente le vecteur vitesse dans le repère véhicule avec l'origine au centre de gravité du véhicule.

$v$ : représente la vitesse longitudinale du véhicule.

$\beta$ : représente l'angle de dérive formé par le vecteur vitesse du véhicule avec l'axe longitudinale du véhicule.

Les forces latérales de contact des pneus Fyf et Fyr varient linéairement avec les dérives des pneus $\alpha f$ et $\alpha r$ et en fonction des rigidités des pneus cf et cr : Fyf=cf*$\alpha$f et Fyr=cr*$\alpha$r.

On pose

$$yL \approx yL_{CG} + ls * \Psi L \text{ où } \Psi L = \Psi - \Psi d.$$

$yL$ : écart latéral du véhicule mesuré à une distance de visée,

$yL_{CG}$ : écart latéral du véhicule mesuré au centre de gravité,

$\Psi$ : angle de cap du véhicule dans un repère absolu,

$\Psi d$ : angle de cap de la trajectoire souhaité, respectivement l'axe de la voie

$\Psi_L$ : angle de cap relatif.

Avec ces hypothèses, on modélise le véhicule par une équation d'état suivant le modèle « bicyclette », le véhicule étant situé sur un plan infini. Le vecteur d'état correspondant comprend l'angle de dérive du véhicule $\beta$ et la vitesse de lacet r. L'équation d'état ainsi obtenue est la suivante.

$$\begin{pmatrix} \dot{\beta} \\ \dot{r} \end{pmatrix} = \begin{pmatrix} a_{11} & a_{12} \\ a_{21} & a_{22} \end{pmatrix} \begin{pmatrix} \beta \\ r \end{pmatrix} + \begin{pmatrix} b_{11} \\ b_{21} \end{pmatrix} \delta_f$$

$$
\begin{aligned}
a_{11} &= -\frac{2(c_r+c_f)}{mv}, & a_{12} &= -1 + \frac{2(l_r c_r - l_f c_f)}{mv^2}, \\
a_{21} &= \frac{2(l_r c_r - l_f c_f)}{I_z}, & a_{22} &= -\frac{2(l_r^2 c_r + l_f^2 c_f)}{I_z v}; \\
c_r &= c_{r0}\nu, & c_f &= c_{f0}\nu; \\
b_{11} &= \frac{2c_f}{mv}, & b_{12} &= 0, \\
b_{21} &= \frac{2c_f l_f}{I_z}, & b_{22} &= \frac{1}{I_z}.
\end{aligned}
$$

$$\text{(Eq. 6)}$$

L'angle $\delta f$ est l'angle de braquage des roues avant du véhicule. Il peut être déterminé par mesure de l'angle de braquage de la direction du véhicule.

L'angle de dérive du vecteur de vitesse $\beta$ est obtenu par l'intermédiaire d'un estimateur. Un tel estimateur est connu de l'état de la technique antérieure, notamment le document WO 2005/061305 décrit une telle estimation par l'intermédiaire d'un observateur d'état.

La vitesse de lacet r est mesurée par le gyroscope du véhicule.

L'erreur de position du véhicule par rapport à l'axe de la voie s'exprime en fonction de l'écart latéral par rapport à l'axe de la voie yL en avant du véhicule et de son angle de cap relatif $\Psi L$ par rapport à la tangente à l'axe de la voie. L'erreur de position est donnée par le système d'équations suivant :

$$\dot{\psi}_L = r - v\rho_{ref}$$
$$\dot{y}_L = v\beta + l_s r + v\psi_L,$$

(Eq. 7)

L'angle de cap relatif ΨL et l'écart latéral par rapport à l'axe de la voie en avant du véhicule yL peuvent être obtenus par un traitement d'images par les caméras embarquées, connu de l'état de la technique.

La courbure de la route ρref est considérée non mesurable et prise en compte comme une perturbation du système.

En rassemblant les éléments présentés dans l'équation 6 et l'équation 7, on obtient le modèle suivant du véhicule et de son erreur de placement par rapport à l'axe de la voie.

$$
\begin{pmatrix} \dot{\beta} \\ \dot{r} \\ \dot{\psi}_L \\ \dot{y}_L \end{pmatrix} =
\begin{pmatrix}
-\frac{2(c_f+c_r)}{mv} & -1+\frac{2(c_r l_r - c_f l_f)}{mv^2} & 0 & 0 \\
-\frac{2(l_f c_f - l_r c_r)}{I_z} & -\frac{2(l_f^2 c_f + l_r^2 c_r)}{v I_z} & 0 & 0 \\
0 & 1 & 0 & 0 \\
v & l_S & v & 0
\end{pmatrix}
\begin{pmatrix} \beta \\ r \\ \psi_L \\ y_L \end{pmatrix} +
$$
$$
+ \begin{pmatrix} \frac{2c_f}{mv} \\ \frac{2l_f c_f}{I_z} \\ 0 \\ 0 \end{pmatrix} \delta_f +
\begin{pmatrix} 0 \\ 0 \\ -v \\ 0 \end{pmatrix} \rho_{ref}.
$$

(Eq. 8)

Les entrées de ce modèle sont l'angle de braquage des roues avant δf et la courbure de la route ρref.

En sortie de ce modèle, on obtient l'état complet du modèle du véhicule x.

$$x = (\beta, r, \psi_L, y_L)^T$$

(Eq. 9)

Le modèle de l'équation Eq. 8 peut être reformulé au moyen de l'équation matricielle suivante :

$$\dot{x} = Ax + B_u \delta_f + B_p \rho_{ref}$$

(Eq. 10)

On suppose par la suite qu'un retour d'état statique de la forme suivante a déjà été synthétisé par la méthode de placement de pôle ou une autre méthode d'automatique :

$$\delta_f = Kx = k_\beta \hat{\beta} + k_r r + k_{\psi L} \psi_L + k_{yL} y_L$$

(Eq. 11)

Avec

$$K = [k_\beta,\ k_r,\ k_{\psi_L},\ k_{y_L}]^T$$

(Eq. 12)

La représentation du système véhicule en boucle fermée de correction LKA (acronyme anglophone pour « Lane Keep Assist ») et pour lequel on néglige l'entrée de la courbure est donc donnée par :

$$\dot{x} = (A + BK)x \qquad (Eq. \ 13)$$

Pour ce système en boucle fermée, on cherche une fonction définie positive V(x)=x$^T$Px avec P=P$^T$ et P une matrice définie positive telle que pour tout $x \in R^4$, la condition suivante est vérifiée :

$$\frac{\partial V}{\partial t} < 0 \qquad (Eq. \ 14)$$

En déclinant par dérivation temporelle de V(x)=x$^T$Px en partant de l'équation 14, on obtient la suite d'équivalences ci-dessous :

$$\dot{x}^T P x + x^T P \dot{x} < 0 \quad \Leftrightarrow \quad (A_{cl}x)^T P x + x^T P A_{cl} x < 0 \quad \Leftrightarrow$$

$$x^T (A + BK)^T P x + x^T P (A + BK) x < 0 \Leftrightarrow$$

$$x^T \left[ (A + BK)^T P + P(A + BK) \right] x < 0 \qquad (Eq. \ 15)$$

L'inégalité initiale est donc satisfaite, si l'inégalité matricielle suivante est satisfaite.

$$\dot{x}^T P x + x^T P \dot{x} < 0 \quad \Leftrightarrow$$

$$(A + BK)^T P + P(A + BK) \prec 0 \qquad (Eq. \ 16)$$

L'inégalité matricielle de l'équation Eq.16 peut être reformulée grâce au changement de variable suivant :

$$Y = KP^{-1} = KQ, \quad \text{où} \quad P^{-1} = Q. \qquad (Eq. \ 17)$$

En appliquant ce changement de variable, on obtient la forme finale de l'équation matricielle

$$QA^T + Y^T B^T + AQ + BY \prec 0 \qquad (Eq. \ 18)$$

De plus, on suppose que l'action corrective LKA démarre pour un état du véhicule contenu dans une zone initiale, correspondant à l'ensemble décrit par les limites suivantes:

$$|\beta| \le \beta^N, \ |r| \le r^N, \ |\dot{\psi}_L| \le \psi_L^N, \ |y_L| \le y_L^N \qquad (Eq. \ 19)$$

Les sommets de cet ensemble sont données par :

$$z_i = [\pm \beta^N, \ \pm r^N, \ \pm \psi_L^N, \ \pm y_L^N]^T \qquad (Eq. \ 20)$$

La fonction recherchée est donc trouvée en résolvant le problème d'optimisation LMI (acronyme anglais « Linear Matrix Inequalities ») suivant :

$$\min \quad trace(Q) \text{ ou } det(Q)$$
$$QA^T + Y^T B^T + AQ + BY \prec 0$$
$$\begin{pmatrix} 1 & (z_i^N)^T \\ z_i^N & Q \end{pmatrix} \succ 0, \quad i = 1,\dots,8$$

(Eq. 21)

Le système décrit ci-dessus garantit que chaque trajectoire du système commençant dans la zone initiale demeure dans un ensemble invariant circonscrit à cette zone initiale.

Le lien de cet ensemble invariant avec la position sur la voie des deux roues avant du véhicule s'écrit de la manière suivante :

$$y_g = y_L + (l_f - l_S)\psi_L + \frac{a}{2} \quad \text{et}$$

$$y_d = y_L + (l_f - l_S)\psi_L - \frac{a}{2}$$

(Eq. 22)

Par construction géométrique, les deux roues avant du véhicule se trouvent sur une bande de largeur 2d centrée sur la voie. La double condition suivante doit donc être satisfaite.

$$y_g \leq d \quad \text{et} \quad y_d \geq -d$$

(Eq. 23)

La double condition de l'équation Eq. 23 peut être reformulée de la façon suivante :

$$-d + \frac{a}{2} \leq y_L + (l_f - l_S)\psi_L \leq d - \frac{a}{2}$$

(Eq. 24)

On inclut ensuite l'ensemble invariant obtenu dans l'espace situé entre deux hyperplans parallèles d'équation correspondant chacun à une des inéquations de l'équation Eq. 24.

La bande maximale sur la voie dans laquelle les roues avant du véhicule resteront pendant la correction LKA est donc décrite par le système d'équations suivant :

$$d^{maxer} = \frac{1}{2}(\sqrt{(fQf^T)} + a)$$

$$\text{où } f = [0, 0, 2(l_f - l_S), 2].$$

(Eq. 25)

De plus, si on considère une position initiale d'activation quelconque x0, le déplacement maximal d(x0) sur la voie est donné par l'équation suivante :

$$d(x_0) = \frac{1}{2}(\sqrt{(x_0^T(Q)^{-1}x_0)(fQf^T)} + a)$$

(Eq. 26)

Le moyen de perception 2 détermine le déplacement latéral maximal Dmax du véhicule sur la voie en appliquant les principes de perception des obstacles latéraux décrits ci-dessus. Ainsi, pour un retour d'état calculé K et une position initiale au moment de l'activation x0, le déplacement latéral maximal sur la voie du véhicule d(x0) est déterminé par application de l'équation Eq. 26.

Pour la suite, supposons qu'un ensemble de gains Ki a été calculé hors ligne par une méthode de placement de pôles ou une autre méthode d'automatique pour des réponses plus ou moins dynamiques (des retours vers le centre voie qui ont lieu plus ou moins rapidement) du véhicule. Ces gains sont mémorisés dans une mémoire non volatile embarquée dans le véhicule pour une utilisation en temps réel.

On va maintenant décrire le fonctionnement du moyen de prise de décision 3.

Le moyen de prise de décision 3 émet une requête d'activation de correction en fonction de la position du véhicule sur la voie de circulation par rapport au déplacement latéral maximal du véhicule sur la voie déterminé par le moyen de perception 2.

Le moyen de prise de décision 3 est apte à fonctionner selon deux modes possibles aptes à être sélectionnés par le conducteur.

Dans un premier mode, le moyen de prise de décision 3 émet une requête d'activation lorsqu'une collision latérale est imminente.

Dans un deuxième mode, le moyen de prise de décision 3 émet une requête d'activation lors d'un dépassement du marquage latéral. Ce deuxième mode de fonctionnement correspond au fonctionnement d'un dispositif LKA. Il ne sera donc pas décrit ici.

Dans le premier mode de fonctionnement, on émet la requête d'activation pour une correction de côté droit, respectivement gauche, uniquement s'il y a un obstacle de côté droit, respectivement gauche. Voici quelques exemples qui illustrent ce fonctionnement :
Si la voiture dérive de côté gauche et s'il y a un obstacle de côté gauche, un déclenchement de la correction aura lieu. Dans un autre mode réalisation l'utilisation du clignotant sera interprétée comme une volonté de changement de voie et l'assistance ne sera pas déclenchée.

Si la voiture dérive de côté gauche et s'il n'y a aucun obstacle de côté gauche, la correction ne se déclenche pas. Dans un autre mode réalisation l'utilisation du clignotant sera interprétée comme une volonté de changement de voie et l'assistance ne sera pas déclenchée de toute façon.

Si la voiture dérive de côté gauche et s'il n'y a aucun obstacle de côté gauche mais s'il y a un obstacle de côté droit, la correction ne se déclenche pas. Dans un autre mode réalisation l'utilisation du clignotant sera interprétée comme une volonté de changement de voie et l'assistance ne sera pas déclenchée de toute façon.

On va maintenant décrire plus précisément le fonctionnement du moyen de prise de décision 3.

En temps réel, avec l'équation 26, le déplacement maximal sur la voie d(x0); est calculé pour une requête d'activation instantanée pour chaque gain Ki. Les gains Ki sont calculés comme mentionné précédemment par la méthode de placement des pôles ou une autre méthode d'automatique.

A chaque pas de temps, parmi les gains Ki, on mémorise des gains Kj correspondant à une valeur de déplacement latéral $d(x0)_j$ inférieur à la valeur de déplacement latéral maximal sur le côté gauche de la voie Dmax_g, valeur qui provient des moyens de perception et des algorithmes associés.

A chaque pas de temps, parmi les gains Ki, on mémorise des gains Kj correspondant à une valeur de déplacement latéral $d(x0)_j$ inférieure à la valeur de déplacement latéral maximal sur le côté droit de la voie Dmax_d, valeur qui provient des moyens de perception et des algorithmes associés.

A chaque pas de temps, parmi les gains Ki, on mémorise des gains Kp correspondant à une valeur de déplacement latéral $d(x0)_p$ inférieur à une distance maximale par rapport au centre de voie. Elle peut par exemple égale à une largeur de voie.

Plus le véhicule dévie par rapport au centre de la voie, plus l'ensemble des gains Kj et Kp se réduisent, car seul les gains très importants peuvent réussir à corriger une sortie de voie sans que la position du véhicule ne dépasse la valeur de déplacement latéral maximal sur le côté droit de la voie Dmax_d, ou une valeur de déplacement latéral maximal sur le côté gauche de la voie Dmax_g. Ces corrections très fortes ne doivent dans aucun cas mettre la voiture dans une situation de dérapage et pour cela dans la phase de calibration du système, des tests de tenue de route et de dynamique du véhicule seront réalisés par des pilotes. Il faudrait également déterminer de manière expérimentale quelle est l'accélération latérale maximale qu'on pourra donner à la voiture et qui sera accepté du point de vue de la prestation client. Pour une déviation importante, à un moment donné un seul gain correctif demeure parmi les ensembles des gains Kj, et Kp.

Dans un premier mode de fonctionnement du moyen de prise de décision 3, la requête d'activation de la correction est émise pour une déviation à gauche, respectivement à droite, quand, parmi les gains Kj, il ne reste qu'un seul gain Le gain restant est transmis au moyen d'intervention 4 afin que la correction soit exécutée.

Dans un deuxième mode de fonctionnement du moyen de prise de décision 3, la requête d'activation de la correction est émise quand, parmi les gains Kp, il ne reste qu'un seul gain. Le gain restant est transmis au moyen d'intervention 4 afin que la correction soit exécutée.

Dans tous les cas, on vise alors une correction tardive, qui ne gêne pas le conducteur, mais qui évite la sortie de voie.

On va maintenant décrire le moyen d'intervention 4. Apres réception de la requête d'activation de correction émise par le moyen de prise de décision 3, le moyen d'intervention 4 commande la correction en fonction du type de direction équipant le véhicule.

La correction peut être émise à destination d'un moyen de calcul du braquage en relation avec la direction du véhicule, si le véhicule dispose d'une direction asservie en angle de braquage par un calculateur embarqué. La correction prend alors la forme d'une consigne d'angle de braquage calculée selon l'équation 11 avec le gain K donné par le gain Kj, respectivement le gain Kp retenu.

La correction peut est émise à destination d'un moyen de commande de l'assistance au braquage et prend la forme d'une consigne de couple de braquage, si le véhicule dispose d'une direction asservie en couple de braquage par un calculateur embarqué. Dans ce cas, le moyen de prise de décision 3 détermine par application de l'équation Eq. 11 un angle de braquage de consigne, à destination d'un régulateur numérique de type « Proportionnel Intégral Dérivé », par exemple, qui asservit le couple de braquage en fonction de l'erreur entre l'angle de braquage de consigne et l'angle de braquage mesuré.

Le système de commande décrit ci-dessus ne nécessite qu'un volume faible de calcul en temps réel, tant au niveau de la détection des obstacles que de la détermination de la correction.

La prise en compte des obstacles latéraux permet d'améliorer de manière considérable l'acceptabilité de la fonction LKA par les conducteurs qui ne souhaitent être assisté qu'en cas de danger imminent.

## Revendications

1. Système de commande (1) de la direction d'un véhicule automobile (5) en cas de collision imminente avec un obstacle (7, 10), le véhicule comprenant un système apte à repérer le véhicule par rapport à sa voie de circulation et apte à déterminer un écart latéral par rapport au centre de la voie à une distance de visée et un angle de cap relatif du véhicule, un moyen de détermination associé à des capteurs, apte à déterminer en temps réel la présence d'obstacles, en position latérale par rapport au véhicule, et/ou en position frontale et en déplacement relatif vers le véhicule, un gyromètre apte à mesurer la vitesse de rotation du véhicule, une direction du véhicule apte à être pilotée en angle de braquage en fonction de la mesure d'un capteur d'angle de braquage ou une direction du véhicule apte à être pilotée en couple de braquage,

   le système de commande comprenant :

   un moyen de perception (2) apte à évaluer la position des obstacles et à déterminer la distance latérale maximale disponible pour le déplacement du véhicule par rapport à ces obstacles,
   un moyen de prise de décision (3) apte à émettre une requête de correction en fonction de la trajectoire du véhicule, et de la distance maximale latérale,
   un moyen d'intervention (4) apte à commander la direction du véhicule pour corriger la trajectoire du véhicule,

   **caractérisé en ce que** le moyen de prise de décision (3) est apte à déterminer des gains de correction de position, à mémoriser au moins un ensemble parmi les gains de correction de position, et, lorsque parmi le au moins un ensemble de gains, il ne reste qu'un seul gain, à émettre la requête d'activation de la correction correspondant à l'ensemble comprenant le gain restant, le gain restant étant transmis au moyen d'intervention (4) afin que la correction soit exécutée.

2. Système de commande selon la revendication précédente, dans lequel le moyen de perception (2) est apte à déterminer la position des obstacles par reconnaissance de forme, puis à déterminer une distance de déplacement latéral du véhicule en fonction de la vitesse de lacet, de l'angle relatif de cap entre l'axe du véhicule et la tangente à la trajectoire de référence, de l'écart latéral entre l'axe du véhicule et la tangente à la trajectoire en avant du véhicule, de l'angle de dérive, de la distance du centre de gravité à l'essieu avant, et de la distance de visée pour la mesure de l'écart latéral en avant du véhicule.

3. Système de commande selon la revendication 2, dans lequel le moyen de prise de décision (3) est apte à émettre une requête d'activation de correction en fonction de la position du véhicule sur la voie de circulation par rapport au déplacement latéral maximal du véhicule sur la voie, déterminé par le moyen de perception (2).

4. Système de commande selon la revendication 2, dans lequel un premier ensemble est mémorisé parmi les gains de correction de position correspondant à une valeur de déplacement latéral inférieure à une valeur de déplacement latéral maximal sur le côté gauche de la voie, et un deuxième ensemble est mémorisé parmi les gains de correction de position correspondant à une valeur de déplacement latéral inférieure à une valeur de déplacement latéral maximal sur le côté droit de la voie, notamment la requête d'activation de la correction est émise pour une déviation à gauche, respectivement à droite, lorsque parmi le premier ou le deuxième ensemble de gains, il ne reste qu'un seul gain.

5. Système de commande selon la revendication 2, dans lequel un troisième ensemble est mémorisé parmi les gains de correction de position correspondant à une valeur de déplacement latéral inférieure à une distance maximale par rapport au centre de voie.

6. Système de commande selon l'une quelconque des revendications 4 ou 5, dans lequel le moyen d'intervention (4) est apte à commander la correction de la trajectoire du véhicule en fonction du gain reçu du moyen de prise de décision (3),

la correction étant émise à destination d'un moyen de calcul du braquage en relation avec la direction du véhicule sous la forme d'une consigne d'angle de braquage ou,
la correction est émise à destination d'un moyen de commande de l'assistance au braquage sous la forme d'une consigne de couple de braquage.

**Patentansprüche**

1. Steuerungssystem (1) zur Steuerung der Lenkung eines Kraftfahrzeugs (5) im Fall einer drohenden Kollision mit einem Hindernis (7, 10), das Fahrzeug umfassend ein System, das geeignet ist, das Fahrzeug in Bezug auf seine Fahrspur zu orten, und geeignet ist, eine seitliche Abweichung in Bezug auf die Mitte der Spur in einem Zielabstand und einen relativen Kurswinkel des Fahrzeugs zu bestimmen, ein Bestimmungsmittel, das Sensoren zugeordnet ist und geeignet ist, in Echtzeit das Vorhandensein von Hindernissen an seitlicher Position in Bezug auf das Fahrzeug und/oder an frontaler Position und in relativer Bewegung zu dem Fahrzeug hin zu bestimmen, ein Gyrometer, das geeignet ist, die Drehzahl des Fahrzeugs zu messen, eine Lenkung des Fahrzeugs, die geeignet ist, in Abhängigkeit von der Messung eines Lenkwinkelsensors im Hinblick auf den Lenkwinkel angesteuert zu werden, oder eine Lenkung des Fahrzeugs, die geeignet ist, im Hinblick auf das Lenkmoment angesteuert zu werden, wobei das Steuerungssystem umfasst:

ein Wahrnehmungsmittel (2), das geeignet ist, die Position der Hindernisse einzuschätzen und den verfügbaren maximalen seitlichen Abstand zum Bewegen des Fahrzeugs in Bezug auf diese Hindernisse zu bestimmen, ein Entscheidungsfindungsmittel (3), das geeignet ist, eine Korrekturanforderung in Abhängigkeit von der Trajektorie des Fahrzeugs und des seitlichen maximalen Abstands auszugeben, ein Eingriffsmittel (4), das geeignet ist, die Lenkung des Fahrzeugs zu steuern, um die Trajektorie des Fahrzeugs zu korrigieren, **dadurch gekennzeichnet, dass** das Entscheidungsfindungsmittel (3) geeignet ist, Positionskorrektur-Gains zu bestimmen, mindestens einen Satz unter den Positionskorrektur-Gains zu speichern und, wenn unter dem mindestens einen Satz von Gains nur ein einziges Gain verbleibt, die Anforderung zur Aktivierung der Korrektur auszugeben, die dem Satz entspricht, der das verbleibende Gain umfasst, wobei das verbleibende Gain an das Eingriffsmittel (4) übertragen wird, damit die Korrektur durchgeführt wird.

2. Steuerungssystem nach dem vorhergehenden Anspruch, bei dem das Wahrnehmungsmittel (2) geeignet ist, die Position der Hindernisse durch Formerkennung zu bestimmen, dann einen Abstand der seitlichen Bewegung des Fahrzeugs in Abhängigkeit von der Giergeschwindigkeit, dem relativen Kurswinkel zwischen der Achse des Fahrzeugs und der Tangente zur Referenztrajektorie, der seitlichen Abweichung zwischen der Achse des Fahrzeugs und der Tangente zur Trajektorie an der Front des Fahrzeugs, dem Driftwinkel, dem Abstand des Schwerpunkts zur Vorderachse und dem Zielabstand für die Messung der seitlichen Abweichung an der Front des Fahrzeugs zu bestimmen.

3. Steuerungssystem nach Anspruch 2, bei dem das Entscheidungsfindungsmittel (3) geeignet ist, eine Korrekturaktivierungsanforderung in Abhängigkeit von der Position des Fahrzeugs auf der Fahrspur in Bezug auf die maximale seitliche Bewegung des Fahrzeugs auf der Spur, die von dem Wahrnehmungsmittel (2) bestimmt wird, auszugeben.

4. Steuerungssystem nach Anspruch 2, bei dem ein erster Satz unter den Positionskorrektur-Gains gespeichert wird, der einem Wert der seitlichen Bewegung entspricht, der kleiner als ein Wert der maximalen seitlichen Bewegung auf der linken Seite der Spur ist, und ein zweiter Satz unter den Positionskorrektur-Gains gespeichert wird, der einem Wert der seitlichen Bewegung entspricht, der kleiner als ein Wert der maximalen seitlichen Bewegung auf der rechten Seite der Spur ist, die Anforderung zur Aktivierung der Korrektur insbesondere für eine Ablenkung nach links beziehungsweise nach rechts ausgegeben wird, wenn unter dem ersten oder dem zweiten Satz von Gains nur ein einziges Gain verbleibt.

5. Steuerungssystem nach Anspruch 2, bei dem ein dritter Satz unter den Positionskorrektur-Gains gespeichert wird, der einem Wert der seitlichen Bewegung entspricht, der kleiner als ein maximaler Abstand in Bezug auf die Mitte der Spur ist.

6. Steuerungssystem nach einem der Ansprüche 4 oder 5, bei dem das Eingriffsmittel (4) geeignet ist, die Korrektur der Trajektorie des Fahrzeugs in Abhängigkeit von dem von dem Entscheidungsmittel (3) empfangenen Gain zu steuern,

   wobei die Korrektur an ein Mittel zum Berechnen des Lenkens in Verbindung mit der Lenkung des Fahrzeugs in Form eines Lenkwinkelsollwerts ausgegeben wird oder
   die Korrektur an ein Mittel zur Steuerung der Unterstützung beim Lenken in Form eines Lenkmomentsollwerts ausgesendet wird.

**Claims**

1. Control system (1) for controlling the steering of a motor vehicle (5) in the event of imminent collision with an obstacle (7, 10), the vehicle comprising a system able to locate the vehicle with respect to its traffic lane and able to determine a lateral divergence with respect to the centre of the lane at a target distance and a relative heading angle of the vehicle, a determining means associated with sensors, which is able to determine, in real time, the presence of obstacles positioned laterally with respect to the vehicle and/or positioned frontally and making a relative movement towards the vehicle, a gyrometer able to measure the speed of rotation of the vehicle, and steering of the vehicle able to be controlled in respect of steering angle depending on the measurement of a steering-angle sensor or steering of the vehicle able to be controlled in respect of steering torque,
   the control system comprising:

   a perceiving means (2) able to evaluate the position of the obstacles and to determine the maximum lateral distance available for movement of the vehicle with respect to these obstacles,
   a decision-making means (3) able to send a correction request depending on the path of the vehicle and on the maximum lateral distance,
   an intervening means (4) able to control the steering of the vehicle in order to correct the path of the vehicle, **characterized in that** the decision-making means (3) is able to determine position-correcting gains, to store at least one set among the position-correcting gains, and, when among the at least one set of gains there remains only a single gain, to send the correction activation request corresponding to the set containing the remaining gain, the remaining gain being transmitted to the intervening means (4) in order to have the correction executed.

2. Control system according to the preceding claim, wherein the perceiving means (2) is able to determine the position of the obstacles through shape recognition, then to determine a distance of lateral movement of the vehicle depending on yaw rate, on the relative heading angle between the axis of the vehicle and the tangent to the reference path, on the lateral divergence between the axis of the vehicle and the tangent to the forward path of the vehicle, on the drift angle, on the distance from the centre of gravity to the front axle, and on the target distance for the measurement of the lateral divergence in front of the vehicle.

3. Control system according to Claim 2, wherein the decision-making means (3) is able to send a correction activation request depending on the position of the vehicle in the traffic lane with respect to the maximum lateral movement of the vehicle in the lane, which is determined by the perceiving means (2).

4. Control system according to Claim 2, wherein a first set is stored among the position-correcting gains corresponding to a lateral movement value less than a maximum lateral movement value on the left-hand side of the lane, and a second set is stored among the position-correcting gains corresponding to a lateral movement value less than a maximum lateral movement value on the right-hand side of the lane, the correction activation request in particular being sent for a left-hand deviation, right-hand deviation, respectively, when among the first or second set of gains there remains only a single gain.

5. Control system according to Claim 2, wherein a third set is stored among the position-correcting gains corresponding to a lateral movement value less than a maximum distance with respect to the lane centre.

6. Control system according to either of Claims 4 and 5, wherein the intervening means (4) is able to control correction of the path of the vehicle depending on the gain received from the decision-making means (3),

the correction being sent to a steering-computing means in relation with the steering of the vehicle in the form of a steering-angle setpoint, or
the correction being sent to an assisted-steering control means in the form of a steering-torque setpoint.

# FIG.1

# FIG.2

## RÉFÉRENCES CITÉES DANS LA DESCRIPTION

**Documents brevets cités dans la description**

- EP 1790542 A
- KR 100851120
- US 7580785 B2
- EP 2288533 B1
- EP 1726481 B1
- US 8111147 B2
- GB 11251231713 A2
- US 2010235035 A
- DE 102012202916
- WO 2005061305 A

**Littérature non-brevet citée dans la description**

- Camera Calibration Toolbox for Matlab. Caltech University
- **N. MINOIU ENACHE.** Assistance préventive à la sortie de voie. l'Université d'Evry Val d'Essonne, 17 Novembre 2008